# EUROPÄISCHE PATENTSCHRIFT

(11) **EP 1 792 203 B1**
(45) Veröffentlichungstag und Bekanntmachung des Hinweises auf die Patenterteilung: **20.06.2012**
(21) Anmeldenummer: 05772039.3
(22) Anmeldetag: 18.07.2005
(51) Int. Cl.: G01S 7/03, H01Q 25/00, G01S 13/93

(54) **MONOSTATISCHER PLANARER MEHRSTRAHLRADARSENSOR**
MONOSTATIC PLANAR MULTIBEAM RADAR SENSOR
CAPTEUR RADAR MULTIFAISCEAUX PLANAIRE MONOSTATIQUE

(30) Priorität: 13.09.2004 DE 102004044130
(43) Veröffentlichungstag der Anmeldung: 06.06.2007
(73) Patentinhaber: ROBERT BOSCH GMBH, 70442 Stuttgart (DE)
(72) Erfinder: HANSEN, Thomas, 31139 Hildesheim (DE); SCHNEIDER, Martin, 31139 Hildesheim (DE); SCHOEBEL, Joerg, 38226 Salzgitter (DE); BRUEGGEMANN, Oliver, 31241 Ilsede (DE)
(86) Internationale Anmeldenummer: PCT/EP2005/053449
(87) Internationale Veröffentlichungsnummer: WO 2006/029926

(56) Entgegenhaltungen:
- EP-A- 0 793 291
- EP-A- 0 959 521
- EP-A- 1 291 966
- EP-A- 1 431 773
- DE-A1- 10 057 564
- DE-A1- 10 235 338
- DE-A1- 19 951 123
- US-A- 3 761 936
- A.F. JACOB, C. METZ, J. GRUBERT, J. HEYEN, L.C. LANGE: "Advanced radar concepts for automotive applications" IEEE MTT-S INTERNATIONAL MICROWAVE SYMPOSIUM IMS 2002, 2002, XP009057098 in der Anmeldung erwähnt
- LEE J J ET AL: "MULTIBEAM ARRAY USING ROTMAN LENS AND RF HETERODYNE" IEEE ANTENNAS AND PROPAGATION SOCIETY INTERNATIONAL SYMPOSIUM 1996 DIGEST. BALTIMORE, JULY 21 - 26, 1996. HELD IN CONJUNCTION WITH THE USNC/URSI NATIONAL RADIO SCIENCE MEETING, NEW YORK, IEEE, US, Bd. VOL. 3, 21. Juli 1996 (1996-07-21), Seiten 1612-1615, XP000755284 ISBN: 0-7803-3217-2

## Beschreibung

### Stand der Technik

Die Erfindung betrifft einen monostatischen Mehrstrahlradarsensor für Kraftfahrzeuge, mit einer Gruppenantenne, einer planaren Linse mit mehreren Eingängen, und einem homodynen Mischersystem.

In Kraftfahrzeugen werden zunehmend Radarsensoren zur Erfassung des Verkehrsumfelds im Rahmen von Fahrerassistenzsystemen eingesetzt, beispielsweise zur radargestützten Abstandsregelung (ACC; Adaptive Cruise Control). Durch Verwendung eines Mehrstrahlradarsensors wird dabei ein gewisses Winkelauflösungsvermögen erreicht, so daß sich für jedes geortete Fahrzeug entscheiden läßt, auf welcher Fahrspur es sich befindet.

Bei den bisher gebräuchlichen Mehrstrahlradarsensoren sind mehrere Antennenpatches, die jeweils einen Strahl erzeugen, nebeneinander in der Brennebene einer Brechungslinse angeordnet, die für die Mikrowellen einen geeigneten Brechungsindex aufweist, so daß die Radarstrahlen wie bei einer optischen Linse gebündelt werden. Die Lage des Antennenpatches bestimmt dabei die Richtung, in die der jeweilige Radarstrahl abgestrahlt wird. Bei einem monostatischen Antennenkonzept wird das von den georteten Objekten reflektierte Radarsignal durch dieselbe Linse wieder auf das Patch fokussiert, das den Strahl erzeugt hat. Diese bekannten Radarsensoren sind relativ sperrig, da ihre Einbautiefe mindestens etwa der Brennweite der Linse entsprechen muß.

Aus DE 199 51 123 A1 ist ein Radarsensor der oben genannten Art bekannt, bei dem als Antenne eine planare Gruppenantenne und anstelle der Brechungslinse eine planare Linse, eine sogenannte Rotman-Linse verwendet wird. Hierdurch wird eine wesentlich flachere Bauweise ermöglicht.

Die Gruppenantenne weist matrixförmig in Zeilen und Spalten angeordnete Antennenelemente auf. Die Antennenelemente in jeder vertikalen Spalte werden vorzugsweise zumindest annähernd gleichphasig angesteuert, wodurch eine Strahlformung in der Vertikalen erreicht wird. Bei der Rotman-Antenne handelt es sich um einen flächigen Mikrowellenleiter mit mehreren Ausgängen, die über Verzögerungsleitungen unterschiedlicher Länge jeweils an eine Spalte der Antennenelemente angeschlossen sind. Die Geometrie des flächigen Mikrowellenleiters und die Längen der Verzögerungsleitungen sind so gewählt, daß man durch unterschiedliche Signallaufzeiten innerhalb der Linse eine Phasenbeziehung zwischen den Antennenspalten erhält, die für eine Strahlformung in der Horizontalen und für eine gewünschte Richtcharakteristik sorgt. Da die Rotman-Linse außerdem mehrere Eingänge aufweist, läßt sich durch Wahl des Eingangs bestimmen, in welcher Richtung die Hauptkeule des Radarstrahls abgestrahlt wird. Indem man das Radarsignal nacheinander über verschiedene Eingänge der Linse einspeist, läßt sich somit die Radarkeule in der Horizontalen schwenken, so daß man während eines vollständigen Schwenks den gesamten Ortungswinkelbereich des Radarsensors abtasten kann. In diesem Fall wird somit für die mehreren Radarstrahlen nur ein einziges Sende- und Empfangssystem mit einem einzigen Mischer benötigt.

In einer Veröffentlichung von A.F. Jacob, C. Metz, J. Grubert, J. Heyen und L.C. Stange "Advanced Radar Concepts for Automotive Applications", IEEE MTT-S International Microwave Symposium IMS 2002, wird diesem Konzept ein alternatives Konzept gegenübergestellt, bei dem sämtliche Radarstrahlen gleichzeitig erzeugt und die Radarechos aus den verschiedenen Richtungen gleichzeitig empfangen werden. Hier wird für jeden Strahl eine gesonderte Sende- und Empfangseinrichtung mit einem eigenen Mischer benötigt. Ein Vorteil dieses Konzepts besteht jedoch darin, daß man aufgrund der festen Phasen- und Amplitudenbeziehung zwischen den einzelnen Strahlen die in den Radarechos enthaltene Winkelinformation extrahieren kann (indem Zwischenfrequenzsignale der einzelnen Strahlkeulen zeitsynchron abgetastet (digitalisiert) werden), ohne daß hierzu eine besondere Phasenreferenz benötigt wird. Ein weiterer Vorteil besteht darin, daß eine vollständige Radarmessung im gesamten Ortungswinkelbereich innerhalb einer kürzeren Zykluszeit durchgeführt werden kann und/oder für die einzelne Messung eine längere Meßzeit zur Verfügung steht, was beispielsweise bei einem FMCW-Radar (Frequency Modulated Continuous Wave) eine verbesserte Auflösung bei der Bestimmung der Abstände und Relativgeschwindigkeiten der georteten Objekte erlaubt.

Die Funktion des Mischersystems besteht darin, das empfangene Radarsignal, dessen Frequenz in der Größenordnung von beispielsweise 77 GHz liegt, mit einem Hochfrequenzsignal eines lokalen Oszillators zu mischen, so daß man durch Mischung ein für die weitere Auswertung geeignetes Zwischenfrequenzsignal erhält.

Bei einem homodynen Mischersystem wird von dem Signal eines Oszillators, der das zu sendende Signal erzeugt, ein Teil abgezweigt und als Lokaloszillatorsignal verwendet, so daß das gesendete Signal und das Signal des lokalen Oszillators die gleiche Frequenz haben. Die Zwischenfrequenz entspricht dann dem Frequenzunterschied zwischen dem Lokaloszillatorsignal und dem empfangenen Signal und ist bei einem Dopplerradar von der Dopplerverschiebung abhängig. Bei einem FMCW-Radar wird die Frequenz des gesendeten Signals und folglich auch die Lokaloszillatorfrequenz rampenförmig moduliert. Die Zwischenfrequenz ist dann auch von der Signallaufzeit und damit vom Abstand des georteten Objekts abhängig und liegt in einer Größenordnung von 0 bis wenige 100 kHz.

Bei einem monostatischen System muß außerdem das von der Antenne empfangene Signal, das dem Mischer zuzuführen ist, von dem gesendeten Signal getrennt werden, das auf derselben Leitung zur Antenne läuft. Hierzu kann z.B. ein Zirkulator eingesetzt werden, der einerseits das vom Oszillator kommende Signal nahezu verlustfrei zur Antenne weiterleitet und andererseits das von der Antenne kommende Signal nahezu verlustfrei zum Mischer weiterleitet. Bei Parallelverarbeitung der Signale aus mehreren Radarstrahlen würde dann für jeden Kanal ein eigener Zirkulator benötigt. Aufgrund des Platzbedarfs und der relativ hohen Kosten des Zirkulators ist diese Lösung jedoch für Kraftfahrzeuge kaum praktikabel.

Es sind verschiedene andere homodyne Mischungskonzepte bekannt, bei denen jedoch generell gewisse Leistungsverluste in Kauf genommen werden müssen.

Beispielsweise kann in Verbindung mit einem durch einen Koppler und zwei Dioden gebildeten Gegentaktmischer ein weiterer Koppler, z.B. ein Ringhybridkoppler oder ein 90°-Hybridkoppler eingesetzt werden, der das vom Oszillator kommende Signal in zwei Anteile aufteilt, von denen einer der Antenne zugeführt wird und der andere als Lokaloszillatorsignal dem Mischer zugeführt wird, und der zugleich das von der Antenne empfangene Signal in zwei Anteile aufteilt, von denen eines dem Mischer zugeführt wird. Der andere Teil des empfangenen Signals wird jedoch in den Ausgang des Oszillators zurückgekoppelt und geht daher verloren.

Bei einem nicht balancierten Mischer mit nur einer einzigen nichtlinearen Diode kann anstelle des Kopplers auch ein Wilkinson-Teiler eingesetzt werden.

In der bereits erwähnten Veröffentlichung von Jacob et al. wird ein Mischungskonzept mit einem Koppler beschrieben, bei dem ein ausgekoppelter Anteil des vom Oszillator kommenden Signals in einem Abschlußwiderstand vernichtet wird.

DE 196 10 850 C1 und DE 102 35 338 A1 beschreiben Beispiele für sogenannte Transfermischer, bei denen das vom Oszillator kommende Signal ausschließlich dem Mischer zugeführt wird. Der Mischer ist hier so abgestimmt, daß ein Teil des Oszillatorsignals durch den Mischer hindurch zur Antenne weitergeleitet wird, weshalb dieser Typ von Mischern auch als "Durchblasemischer" bezeichnet wird.

Aus der DE 199 51123 A1 ist ein Radarsensor sowie eine Radarantenne für ein Überwachen der Umgebung eines Kraftfahrzeuges bekannt, bei der durch die planare Anordnung sowohl der Steuerschaltung als auch der Radarantenne ein kompakter Aufbau erreicht wird, so daß der Radarsensor insbesondere im Bereich einer Stoßstange des Kraftfahrzeuges angeordnet werden kann. Die bevorzugten Ausgestaltungen bestehen in dem separaten Leitungsträger zur Anordnung von Leitungen zur Übertragung von Hochfrequenzsignalen zwischen der Steuerschaltung und der Radarantenne und in der Ausgestaltung der als Rotmanlinse ausgestalteten Radarantenne in Bezug auf die Signallaufzeiten und in Bezug auf eine schichtweise Anordnung von Rotmanlinse und Gruppenantenne.

### Vorteile der Erfindung

Die Erfindung mit den in Anspruch 1 angegebenen Merkmalen schafft einen verlustarmen monostatischen Mehrstrahlradarsensor mit planarer Linse, der zu geringen Kosten und mit vergleichsweise einfachen und kompaktem Schaltungsaufbau eine Parallelverarbeitung der Signale der mehreren Radarstrahlen ermöglicht. Dies wird durch den Einsatz von Transfermischern erreicht. Dabei ist jedem Eingang der Linse und damit jedem der gleichzeitig erzeugten Radarstrahlen ein eigener Transfermischer zugeordnet. Aufgrund der besonderen Eigenschaften der Transfermischer lassen sich die Mischer in der benötigten Anzahl auf engem Raum auf einer Platine anordnen, so daß kurze Leitungswege erreicht werden und damit die Leistungsverluste des Systems als Ganzes sehr klein gehalten werden können. Die Parallelverarbeitung ist gerade in Verbindung mit einer planaren Linse besonders vorteilhaft, weil bei einer solchen Linse relativ starke Nebenkeulen entstehen, die die Bestimmung der Azimutwinkel der georteten Objekte durch Amplitudenvergleich erschweren. Bei Parallelverarbeitung kann nämlich, ohne daß eine Phasenreferenz benötigt wird, zur Bestimmung des Azimutwinkels auch die Phasenbeziehung zwischen den in den verschiedenen Kanälen empfangenen Signalen ausgewertet werden, unter Berücksichtigung des Umstands, daß die aus Nebenkeulen empfangenen Signale gegenüber Signalen aus der Hauptkeule um 180° phasenverschoben sind. Die Parallelverarbeitung, und damit der Verzicht auf eine Kanalumschaltung und ein Phasenreferenzsignal, ermöglichen den Einsatz von Transfermischern, die ihrerseits wieder den Aufbau einer zur Parallelverarbeitung geeigneten Schaltung erleichtern oder überhaupt erst ermöglichen.

Vorteilhafte Ausgestaltungen der Erfindung ergeben sich aus den Unteransprüchen.

Die durch die Erfindung ermöglichte Parallelverarbeitung in mehreren Kanälen ist bei einem FMCW-Radar besonders vorteilhaft.

Der Transfermischer kann wahlweise als Gegentaktmischer oder als Eindiodenmischer ausgebildet sein. Bevorzugt werden die eine oder die beiden Dioden durch Anlegen einer Gleichspannung so vorgespannt, daß sich durch die Höhe der Vorspannung der Arbeitspunkt der Diode und damit die Abstimmung und die Durchlässigkeit des Transfermischers zur Antenne geeignet einstellen lassen.

In einer besonders einfachen Ausführungsform ist eine einzige Diode direkt zwischen den Ausgang des Oszillators und die Antenne geschaltet. Die Zwischenfrequenz läßt sich dann zwischen der Diode und der Antenne abgreifen, und durch Hochfequenzsperren kann ein Abfluß des Hochfrequenzsignals über den Zwischenfrequenzausgang und die Gleichspannungsanschlüsse verhindert werden.

Die Gruppenantenne, die planare Linse und die Transfermischer lassen sich auf einer gemeinsamen, durch ein Mikrowellensubstrat gebildeten Platine anordnen, so daß eine sehr flache Bauweise erreicht wird, die für den Einbau in Kraftfahrzeuge besonders günstig ist. Wahlweise ist auch eine gefaltete Bauweise möglich, bei der zwei Platinen, von denen eine die Gruppenantenne und die andere die planare Linse und die Mischer trägt, flach aufeinanderliegen und durch eine metallisierte Zwischenschicht voneinander getrennt sind. Auf diese Weise läßt sich die Grundfläche der Platine etwa halbieren. Die Verbindung zwischen der Linse und der Gruppenantenne erfolgt dann z.B. über leitende Durchkontaktierungen oder vorzugsweise mittels Strahlungskopplung durch Kopplungsschlitze in der metallisierten Zwischenschicht.

Die Linse ist vorzugsweise eine Rotman-Linse, die ätztechnisch als Flächenleiter auf dem mikrowellentauglichen Substrat der Platine hergestellt werden kann. Wahlweise kann die Rotman-Linse jedoch auch als Hohlleiter ausgebildet sein, der sich frästechnisch in der Platine herstellen läßt, oder als "Hohlleiter" , hergestellt durch Vias in den Zwischenlagen einer Mehrlagenleiterplatte.

### Zeichnung

Ausführungsbeispiele der Erfindung sind in den Zeichnungen dargestellt und in der nachfolgenden Beschreibung näher erläutert.

Es zeigen:
- Figur 1: eine schematisierte Ansicht eines Mehrstrahlradarsensors gemäß einer Ausführungsform der Erfindung;
- Figur 2, 3 und 4: eine Rückansicht, Seitenansicht und Frontansicht eines Mehrstrahlradarsensors gemäß einem anderen Ausführungsbeispiel; und
- Fig. 5 bis 7: vereinfachte Schaltbilder für unterschiedliche Ausführungsformen von Transfermischern.

### Beschreibung der Ausführungsbeispiele

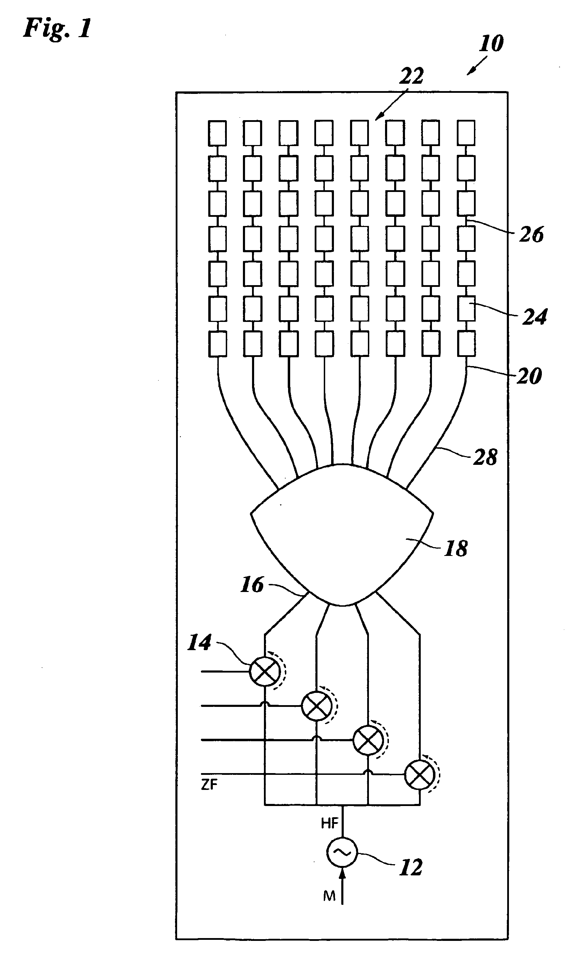

Figur 1 zeigt den Aufbau eines Radarsensors auf einer Platine 10 aus einem mikrowellentauglichen Material. Als Beispiel soll angenommen werden, daß es sich um ein FMCW-Radar handelt. Einem Oszillator 12, der hier auf der Platine 10 gezeigt ist, wahlweise jedoch auch außerhalb der Platine angeordnet sein kann, wird demgemäß ein Modulationssignal M zugeführt, das die rampenförmige Modulation der Frequenz des Oszillators 12 bestimmt. Der Oszillator liefert ein Hochfrequenzsignal HF, dessen Frequenz z.B. in der Größenordnung von 77 GHz liegt. Dieses Hochfrequenzsignal wird über parallele Leitungen mehreren, im gezeigten Beispiel vier, Transfermischern 14 zugeführt, die mit vier Eingängen 16 einer Rotman-Linse 18 verbunden sind. Durch gestrichelte Pfeile in Figur 1 wird symbolisiert, daß das Hochfrequenzsignal durch die Transfermischer hindurch zu den Eingängen 16 weitergeleitet wird. Durch geeignete Wahl der Leitungslängen und/oder durch nicht gezeigte Anpaßglieder ist sichergestellt, daß das Hochfrequenzsignal auf allen vier Kanälen die Eingänge der Rotman-Linse 18 phasengleich oder zumindest mit einer definierten Phasenbeziehung erreicht. Auch nötige Anpaßglieder zur Impedanzanpassung sind in der Zeichnung aus Gründen der Übersichtlichkeit nicht dargestellt.

Die Rotman-Linse 18 ist ein Flächenleiter, in dem sich die über die Eingänge 16 eingespeisten Mikrowellensignale flächig ausbreiten können. Gegenüberliegend zu den vier Eingängen 16 weist die Rotman-Linse eine Vielzahl von Verzögerungsleitungen 28 und Ausgängen 20 auf. Durch die spezielle Geometrie der Rotman-Linse 18 und die Längen der Verzögerungsleitungen 28 wird die Phasenbeziehung zwischen den Hochfrequenzsignalen bestimmt, die die verschiedenen Ausgänge 20 erreichen.

Auf der Platine 10 ist weiterhin eine Gruppenantenne 22 mit einer matrixförmigen Anordnung von Antennenelementen 24 angeordnet. Die Matrix weist mehrere Spalten 26 auf, in denen die Antennenelemente 24 miteinander verbunden sind. Jede Spalte 26 ist außerdem mit einem der Ausgänge der Rotman-Linse 18 verbunden. Die leitenden Verbindungen zwischen den einzelnen Antennenelementen 24 jeder Spalte sind vorzugsweise so angepaßt, daß das Radarsignal von sämtlichen Antennenelementen einer Spalte gleichphasig abgestrahlt wird. Wenn der Radarsensor in ein Kraftfahrzeug eingebaut ist, sind die Spalten 26 vertikal orientiert, so daß durch die vorzugsweise im wesentlichen gleichphasige Abstrahlung des Radarsignals über die Antennenelemente 24 eine Strahlformung und -bündelung in der Vertikalen erreicht wird.

Die Phasenbeziehung zwischen den verschiedenen Spalten 26 ist dagegen durch die Geometrie der Rotman-Linse 18 so bestimmt, daß in der Horizontalen der Effekt einer optischen Linse nachgeahmt wird und somit eine Strahlbündelung mit weitgehender Unterdrückung von Nebenkeulen erreicht wird. Die Phasenbeziehung zwischen den Spalten 26 ist dabei für die verschiedenen Anteile des Hochfrequenzsignals, die über die verschiedenen Eingänge 16 der Rotman-Linse eingespeist werden, voneinander verschieden und entspricht jeweils einer anderen Richtcharakteristik, so daß die Gruppenantenne 22 mehrere in der Horizontalen aufgefächerte Radarstrahlen erzeugt.

Zur Vereinfachung der Darstellung soll nun angenommen werden, daß genau einer dieser Radarstrahlen auf ein Hindernis, beispielsweise ein anderes Fahrzeug trifft und daran reflektiert wird. Der reflektierte Strahl wird dann von den Antennenelementen 24 empfangen und durch die Rotman-Linse 18 ähnlich wie bei einer optischen Linse wieder auf den Eingang 16 fokussiert, der diesem Strahl zugeordnet ist. Vom Eingang 16 gelangt das empfangene Signal dann in den zugehörigen Transfermischer 14, wo es mit dem Hochfrequenzsignal HF des Oszillators gemischt wird. An einem Zwischenfrequenzausgang des Transfermischers 14 erhält man so ein Zwischenfrequenzsignal ZF, dessen Frequenz der Differenz zwischen den beiden Signalen entspricht, die im Transfermischer gemischt wurden. Diese Differenz ist bei einem FMCW-Radar von dem Abstand und der Relativgeschwindigkeit des reflektierenden Objekts abhängig.

Da sich in der Praxis die von der Gruppenantenne 22 emittierten Radarstrahlen überlappen, erzeugt ein reflektierendes Objekt ein Radarecho nicht nur in einem, sondern in mehreren der parallelen Kanäle des Radarsensors, so daß mehrere Transfermischer 14 ein Signal von diesem Objekt empfangen und daraus durch Mischung ein entsprechendes Zwischenfrequenzsignal ZS bilden. Da alle beteiligten Radarstrahlen dasselbe Objekt gleichzeitig erfassen, hat das Objekt für alle Kanäle den gleichen Abstand und die gleiche Relativgeschwindigkeit, so daß die von den verschiedenen Transfermischern erzeugten Zwischenfrequenzsignale die gleiche Frequenz haben. Die Amplituden- und/oder Phasenbeziehung dieser Zwischenfrequenzsignale gibt Aufschluß über den Azimutwinkel des georteten Objekts.

Wenn mehrere Objekte gleichzeitig geortet werden, enthalten die Zwischenfrequenzsignale mehrere Frequenzkomponenten entsprechend dem Abstand und der Relativgeschwindigkeit des jeweiligen Objekts.

Die Frequenzspektren der Zwischenfrequenzsignale ZF werden in einer nicht gezeigten Auswerteeinheit in bekannter Weise ausgewertet.

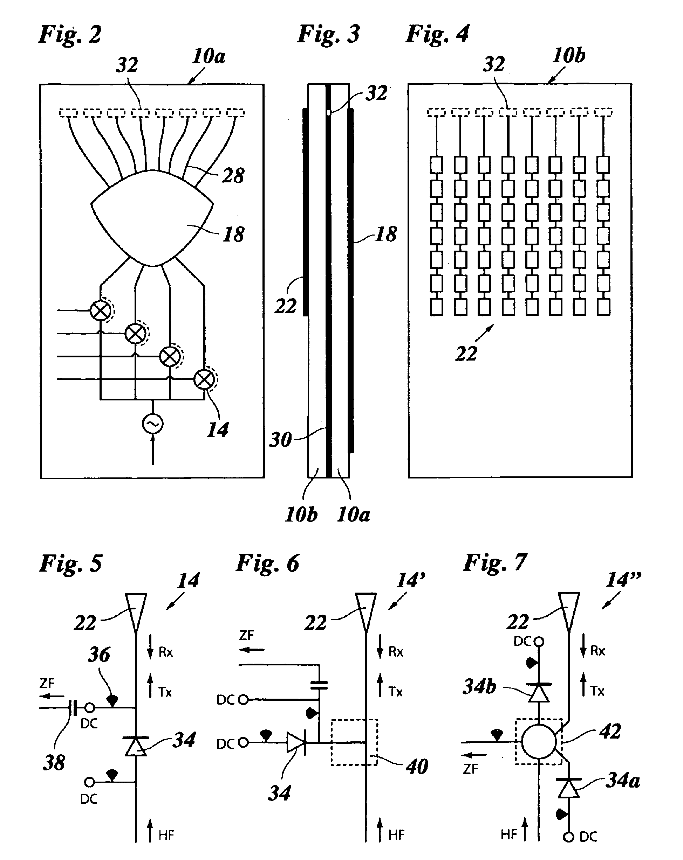

Figuren 2 bis 4 zeigen ein abgewandeltes Ausführungsbeispiel, bei dem die Transfermischer 14 und die Rotman-Linse 18 einerseits und die Gruppenantenne 22 andererseits auf verschiedenen Platinen 10a, 10b angeordnet sind, die Rücken an Rücken aneinanderliegen und zwischen denen eine metallisierte Zwischenschicht 30 eingefügt ist. Die Zwischenschicht 30 weist für jede Verzögerungsleitung 28 einen Koppelschlitz 32 auf, der die Verzögerungsleitung mit der zugehörigen Spalte der Gruppenantenne 22 koppelt. Diese Ausführungsform ermöglicht eine besonders kompakte Gestaltung des Radarsensors. Anstelle einer metallischen Zwischenschicht können auch mehrere Substrat- und Metallebenen (mit jeweiligen Koppelschlitzen oder Aussparungen) vorgesehen sein. Dabei muß eine gute elektrische Verbindung der beiden Hochfrequenz-Metallebenen realisiert werden. Auf den inneren Metallebenen können Niederfrequenz- und Digitalsignale geführt werden.

Figur 5 zeigt in der Form eines vereinfachten Schaltbildes einen besonders einfachen Aufbau eines der Transfermischer 14. Das Hochfrequenzsignal HF liegt an einer nichtlinearen Halbleiterdiode 34 an, deren Arbeitspunkt durch Anlegen einer Vorspannung DC so eingestellt ist, daß, ggf. mit Hilfe zusätzlicher, nicht gezeigter Anpaßglieder, eine gute Impedanzanpassung erreicht wird und die Diode in einem gewissen Ausmaß für das Hochfrequenzsignal durchlässig ist, so daß dieses Signal als Sendesignal Tx zur Antenne 22 weitergeleitet wird (die Rotman-Linse 18 ist hier nicht gezeigt). Das von der Antenne empfangene Signal Rx läuft in Gegenrichtung zur Diode 34 zurück und überlagert sich dort mit dem gesendeten Signal, so daß aufgrund der Nichtlinearität der Diode das Zwischenfrequenzsignal ZF gebildet wird, das beispielsweise zwischen der Diode und der Antenne abgegriffen wird. Hochfrequenzsperren 36 verhindern den Abfluß des Hochfrequenzsignals über die elektrischen Zuleitungen, die zum Anlegen der Gleichspannung und zum Abgriff des Zwischenfrequenzsignals dienen. Das Zwischenfrequenzsignal wird mit Hilfe eines Kondensators 38 von der angelegten Gleichspannung getrennt.

Bei dem in Figur 5 gezeigten Transfermischer wird somit nur eine einzige Diode benötigt, die direkt zwischen den Oszillator und die Antenne geschaltet ist. Dies ermöglicht eine kostengünstige Herstellung des Transfermischers sowie eine kompakte Anordnung seiner Bauelemente auf der Platine 10 oder 10a. Auch die mehreren gleich aufgebauten Transfermischer 14 können daher auf engem Raum auf der Platine angeordnet werden, so daß kurze Leitungswege entsprechend geringe Leitungsdämpfungen erreicht werden. Auch der Transfermischer selbst ist relativ verlustarm, so daß sich insgesamt die Signalverluste, einschließlich der unvermeidlichen Verluste in der Rotman-Linse 18, so minimieren lassen, daß trotz der kompakten und kostengünstigen Bauweise des Radarsensors eine hohe Empfindlichkeit erreicht wird.

Figur 6 zeigt ein anderes Ausführungsbeispiel eines Transfermischers 14', bei dem die Diode 34 über eine T-Verzweigung 40 an den Leitungspfad zwischen Oszillator und Antenne angeschlossen ist. Bei den Transfermischern nach Fig. 5 oder 6 kann das Zwischenfrequenzsignal auch an einer anderen geeigneten Stelle, z. B. auf der anderen Seite der Diode, abgegriffen werden, ggf. über eine eigene Hochfrequenzsperre.

Figur 7 zeigt als weiteres Beispiel einen Transfermischer 14'', der als Gegentaktmischer mit zwei Dioden 34a, 34b ausgebildet ist. Die Dioden liegen in den Koppelpfaden eines Kopplers 42, beispielsweise eines Ringhybridkopplers oder 90°-Kopplers. Auch hier sind die Dioden mit einer Gleichspannung vorgespannt und so abgestimmt, daß eine gute Anpassung erreicht wird, wobei jedoch der Reflexionsfaktor an den Dioden 34a, 34b von 0 verschieden ist, so daß ein gewisser Anteil des Hochfrequenzsignals reflektiert und als Sendesignal Tx in den Antennenpfad gekoppelt wird. Das Zwischenfrequenzsignal ZF wird üblicherweise am Koppler abgegriffen.

## Patentansprüche

1. Monostatischer Mehrstrahlradarsensor für Kraftfahrzeuge, mit einer Gruppenantenne (22), einer planaren Linse (18) mit mehreren Eingängen (16), und einem homodynen Mischersystem mit mehreren Eindioden-Transfermischern (14; 14'; 14"), die parallel an die Eingänge (16) der planaren Linse (18) angeschlossen sind, entsprechend mehreren parallelen Kanälen des Radarsensors, wobei jeweils ein Kanal jeweils einem Eingang der planaren Linse und damit jeweils einem Radarstrahl zugeordnet ist, wobei die Diode (34) des jeweiligen Transfermischers (14) zwischen einen Oszillator (12) und den jeweiligen Eingang (16) der planaren Linse (18) geschaltet ist und die Transfermischer (14) und die planare Linse (18) auf einer gemeinsamen Platine (10; 10a) angeordnet sind und die planare Linse (18) und die Gruppenantenne (22) auf verschiedenen Platinen (10a, 10b) angeordnet sind, die Rücken an Rücken aneinanderliegen und durch eine metallisierte Zwischenschicht (30) getrennt sind, **dadurch gekennzeichnet, dass**
die von der Gruppenantenne (22) emittierten Radarstrahlen einander überlappen, und ein reflektierendes Objekt ein Radarecho nicht nur in einem, sondern in mehreren parallelen Kanälen des Radarsensors erzeugt, so dass jeder Transfermischer (14) dieser mehreren parallelen Kanäle ein Signal von diesem Objekt empfängt und daraus durch Mischung im jeweiligen Transfermischer (14) entsprechende Zwischenfrequenzsignale (ZS) gleicher Frequenz bildet, aus deren relativer Amplituden- und Phasenbeziehung zwischen den Kanälen der Azimutwinkel des reflektierenden Objekts bestimmt wird.

2. Radarsensor nach Anspruch 1, **dadurch gekennzeichnet, daß** die Linse (18) und die Gruppenantenne (22) auf einer gemeinsamen Platine (10) angeordnet sind.

3. Radarsensor nach Anspruch 1, **dadurch gekennzeichnet, daß** die Linse (18) und die Gruppenantenne (22) durch Koppelschlitze (32) in der Zwischenschicht (30) miteinander gekoppelt sind.

4. Radarsensor nach Anspruch 1, **dadurch gekennzeichnet, daß** die Diode (34) des jeweiligen Transfermischers über eine T-Verzweigung (40) an einen Signalpfad angeschlossen ist, der von einem Oszillator (12) zum Eingang (16) der Linse (18) führt.

5. Radarsensor nach einem der vorstehenden Ansprüche, **dadurch gekennzeichnet, daß** die Transfermischer (14) an einen Oszillator (12) mit modulierbarer Frequenz angeschlossen sind.

6. Radarsensor nach Anspruch 5, **dadurch gekennzeichnet, daß** er als FMCW-Radarsensor ausgebildet ist.

## Claims

1. Monostatic multibeam radar sensor for motor vehicles, having a group antenna (22), a planar lens (18) having a plurality of inputs (16), and a homodyne mixer system having a plurality of single-diode transfer mixers (14; 14'; 14"), which are connected in parallel to the inputs (16) of the planar lens (18), in a manner corresponding to a plurality of parallel channels of the radar sensor, wherein a respective channel is associated with a respective input of the planar lens and hence with a respective radar beam, wherein the diode (34) of the respective transfer mixer (14) is connected between an oscillator (12) and the respective input (16) of the planar lens (18), and the transfer mixers (14) and the planar lens (18) are arranged on a common circuit board (10; 10a), and the planar lens (18) and the group antenna (22) are arranged on different circuit boards (10a, 10b) which adjoin one another back to back and are isolated by a metallized intermediate layer (30), **characterized in that**
the radar beams emitted by the group antenna (22) overlap one another, and a reflecting object produces a radar echo not just in one but rather in a plurality of parallel channels of the radar sensor, as a result of which each transfer mixer (14) in this plurality of parallel channels receives a signal from this object and, by mixing in the respective transfer mixer (14), forms corresponding intermediate frequency signals (ZS) of the same frequency from said signal, with the angle of azimuth of the reflecting object being determined from the relative amplitude and phase relationships of said intermediate frequency signals between the channels.

2. Radar sensor according to Claim 1, **characterized in that** the lens (18) and the group antenna (22) are arranged on a common circuit board (10).

3. Radar sensor according to Claim 1, **characterized in that** the lens (18) and the group antenna (22) are coupled to one another through coupling slots (32) in the intermediate layer (30).

4. Radar sensor according to Claim 1, **characterized in that** the diode (34) of the respective transfer mixer is connected to a signal path, which is routed from an oscillator (12) to the input (16) of the lens (18), by means of a T-junction (40).

5. Radar sensor according to one of the preceding claims, **characterized in that** the transfer mixers (14) are connected to an oscillator (12) with a modulatable frequency.

6. Radar sensor according to Claim 5, **characterized in that** it is in the form of an FMCW radar sensor.

## Revendications

1. Capteur radar multifaisceaux monostatique pour véhicules automobiles, avec une antenne en réseau (22), une lentille planaire (18) à plusieurs entrées (16) et un système mélangeur homodyne à plusieurs mélangeurs de transfert à diode unique (14 ; 14' ; 14") raccordées en parallèle aux entrées (16) de la lentille planaire (18), correspondant à plusieurs canaux parallèles du capteur radar, dans lequel respectivement un canal est respectivement affecté à une entrée de la lentille planaire (18) et affecté de ce fait à un faisceau radar, dans lequel la diode (34) du mélangeur de transfert respectif est branchée entre un oscillateur (12) et l'entrée (16) respective de la lentille planaire (18), et les mélangeurs de transfert (14) sont disposés avec la lentille planaire (18) sur une platine commune (10 ; 10a), et la lentille planaire (18) et l'antenne en réseau (22) sont disposées sur des platines différente (10a ; 10b), les deux platines reposant dos à dos et séparées par une couche intermédiaire métallisée (30),
**caractérisé en ce que**
les faisceaux radar émis par l'antenne en réseau (22) se superposent mutuellement, et un objet réfléchissant génère un écho radar non seulement dans un mais aussi dans plusieurs canaux parallèles du capteur radar, de telle sorte que chaque mélangeur de transfert (14) reçoit un signal de cet objet via cette pluralité de canaux, et forme à partir de ceux-ci des signaux correspondants de fréquence intermédiaire (ZS) de même fréquence par mélange dans le mélangeur de transfert (14) respectif, ce qui détermine l'angle azimutal de l'objet réfléchissant à partir des amplitudes relatives et des relations de phase entre les canaux.

2. Capteur radar selon la revendication 1, **caractérisé en ce que** la lentille (18) et l'antenne en réseau (22) sont disposées sur une platine commune (10).

3. Capteur radar selon la revendication 1, **caractérisé en ce que** la lentille (18) et l'antenne en réseau (22) sont mutuellement couplées par l'intermédiaire de fentes de couplage (32) dans la couche intermédiaire (30).

4. Capteur radar selon la revendication 1, **caractérisé en ce que** la diode (34) du mélangeur de transfert respectif est raccordée à un chemin de signaux par l'intermédiaire d'une jonction (40) en T menant d'un oscillateur (12) à l'entrée (16) de la lentille (18).

5. Capteur radar selon une des revendications précédentes, **caractérisé en ce que** les mélangeurs de transfert (14) sont raccordés à un oscillateur (12) à fréquence modulable.

6. Capteur radar selon la revendication 5, **caractérisé en ce qu'**il est réalisé sous la forme de capteur radar FMCW.
